# DEMANDE DE BREVET EUROPEEN

(11) **EP 4 670 889 A1**
(43) Date de publication de la demande: **31.12.2025**
(21) Numéro de dépôt: 25184550.9
(22) Date de dépôt: 23.06.2025
(51) Int. Cl.: B23K 9/04, B22F 10/22, B22F 12/90, B23K 9/095, B23K 26/03, B23K 26/342, B33Y 30/00, B33Y 10/00

(54) **PROCEDE ET DISPOSITIF DE FABRICATION ADDITIVE PAR DEPOT DE FIL METALLIQUE FONDU SOUS ENERGIE CONCENTREE AVEC CONTROLE DE LA VITESSE D' ALIMENTATION DU FIL METALLIQUE**

(30) Priorité: 24.06.2024 FR 2406775
(71) Demandeur: Institut Maupertuis, 35170 Bruz (FR)
(72) Inventeur: MAUVOISIN, Ronan, 35580 LASSY (FR); BONNEAU, Benjamin, 35200 Rennes (FR); LAILLE, Damien, 35320 LA BOSSE DE BRETAGNE (FR); ZOUBIRI, Abdellah, 35200 RENNES (FR)
(74) Mandataire: Germain Maureau

(57) **Abrégé**

La présente demande concerne un procédé de fabrication additive par dépôt de fil métallique (13) fondu sous énergie concentrée dans lequel on fait fondre une extrémité distale (13A) du fil métallique (13) avec la source d'énergie concentrée (12B) afin de créer une extrémité fondue (EF) pour déposer le matériau métallique fondu issu de l'extrémité fondue (EF) sur un support (S) ; on détecte la position d'un point d'impact (PI) de l'extrémité fondue (EF) sur le support (S) ; on détermine la distance D entre la position du point d'impact (PI) et la position du point nominal de fusion prédéterminé (PF) ; et on ajuste la vitesse d'alimentation Vf en fonction de la distance D. La présente demande concerne aussi un dispositif de fabrication additive (15) par dépôt de fil métallique fondu sous énergie concentrée.

## Description

### Domaine Technique

Le présent exposé concerne un procédé de fabrication additive par dépôt de fil métallique fondu sous énergie concentrée avec contrôle de la vitesse d'alimentation du fil métallique, ainsi qu'un dispositif de fabrication additive par dépôt de fil métallique fondu sous énergie concentrée avec contrôle de la vitesse d'alimentation du fil métallique.

### Technique antérieure

Lors de la fabrication d'une pièce par fabrication additive par dépôt de fil métallique fondu sous énergie concentrée, il est particulièrement délicat d'assurer l'intégrité géométrique de la pièce finale par rapport à la forme théorique désirée, notamment pour les pièces présentant une hauteur importante (par exemple 10 couches ou plus). En effet, des irrégularités géométriques se forment et s'accentuent au fur et à mesure de l'empilement des couches, ce qui au bout d'un certain moment dégrade significativement la qualité de dépôt des couches suivantes.

Une solution pour palier à cette problématique est de procéder à des passes croisées pour former les différentes couches (i.e. des orientations croisées de mouvements de dépôt pour former les couches successives de matière), ce qui peut permettre de « gommer » des irrégularités entre deux couches successives. Une autre solution consiste à calculer dynamiquement le pas en hauteur entre les différentes couches successives, en général en réduisant le pas au fur et à mesure de l'augmentation de la hauteur de la pièce, afin de gagner en précision lors du dépôt.

Toutefois, ces solutions sont souvent complexes à mettre en œuvre, peuvent être très dépendantes de la géométrie des pièces et du matériau utilisé (cuivre, nickel, fer, titane, etc.), prennent beaucoup de temps pour être mises au point et à exécuter, peuvent être fonction des machines sur lesquelles elles sont mises en œuvre (notamment vis-à-vis des tolérances, des vitesses, accélérations, du type de machine, par exemple robot cartésien ou robot polaire, etc.), demandent souvent un grand niveau d'expertise à l'opérateur pour les mettre en œuvre, et au final ne donnent pas toujours entièrement satisfaction. Il existe donc un besoin en ce sens.

### Exposé de l'invention

Un mode de réalisation concerne un procédé de fabrication additive par dépôt de fil métallique fondu sous énergie concentrée dans lequel on fournit un dispositif de fabrication additive par dépôt de fil métallique fondu sous énergie concentrée comprenant un système d'alimentation en fil métallique configuré pour amener le fil métallique à une vitesse d'alimentation Vf et présentant une buse d'alimentation et une source d'énergie concentrée configurée pour faire fondre une extrémité distale du fil métallique issu de la buse d'alimentation à un point nominal de fusion prédéterminé et créer une extrémité fondue ; on fait fondre une extrémité distale du fil métallique avec la source d'énergie concentrée afin de créer une extrémité fondue pour déposer le matériau métallique fondu issu de l'extrémité fondue sur un support ; on détecte la position d'un point d'impact de l'extrémité fondue sur le support ; on détermine la distance D entre la position du point d'impact et la position du point nominal de fusion prédéterminé ; et on ajuste la vitesse d'alimentation Vf en fonction de la distance D.

Au sens du présent exposé, par « fabrication additive par dépôt de fil métallique fondu sous énergie concentrée » on entend une fabrication additive où la matière première se présente sous forme filaire, en matériau métallique, par exemple 100% métallique, et fondue par apport d'énergie concentrée telle qu'un laser, un faisceau d'électron ou un arc électrique / arc plasma, etc.. Une telle fabrication additive peut être connue par la personne du métier sous la terminologie anglaise « DED metallic wire » pour « Direct Energy Deposition metallic wire ». Par exemple, la fabrication additive laser-fil, ou WLAM pour « Wire Laser Additive Manufacturing » en anglais, est un exemple de fabrication additive par dépôt de fil métallique fondu utilisant un laser comme source d'énergie concentrée. Selon un autre exemple, la fabrication additive arc-fil, ou WAAM pour « Wire Arc Additive Manufacturing » en anglais, est un exemple de fabrication additive par dépôt de fil métallique fondu utilisant un arc électrique ou arc plasma comme source d'énergie concentrée. Selon encore un autre exemple, la fabrication additive par faisceau d'électron, ou EBAM pour « Electron Beam Additive Manufacturing » en anglais, est un exemple de fabrication additive par dépôt de fil métallique fondu utilisant un faisceau d'électron comme source d'énergie concentrée.

Le fil métallique peut présenter toute forme de section et/ou de dimension, et comprendre tout type de métal ou d'alliage métallique, à tout degrés de pureté, par exemple du cuivre, du nickel, de l'aluminium, du fer, du titane, etc., ou tout alliage à base de tels métaux ou d'autres métaux. Par exemple, le fil métallique peut être un fil de section pleine et continue, ou un fil fourré (i.e. fil comprenant une enveloppe métallique continue et un coeur comprenant une poudre métallique). Par exemple, le fil métallique est 100% métallique en masse. Par la suite et sauf indication contraire par « fil » on entend « fil métallique ».

Le système d'alimentation permet d'alimenter la buse d'alimentation en fil, et de distribuer ou délivrer le fil, en sortie de buse, à une vitesse d'alimentation Vf. Le système d'alimentation est configuré pour pouvoir faire varier la vitesse d'alimentation Vf. La source d'énergie concentrée est configurée pour faire fondre le fil, ou une extrémité distale ou libre du fil (ou encore une portion d'extrémité distale), en aval de la sortie de la buse d'alimentation. En délivrant continument du fil, la source d'énergie concentrée permet de faire fondre le fil continument et de pouvoir déposer continument du matériau métallique fondu sur le support. Dans la suite et sauf indication contraire, par « buse » on entend « buse d'alimentation ».

Le point nominal de fusion prédéterminé est le point (ou localisation, ou encore point géométrique) où la concentration d'énergie de la source d'énergie concentrée est telle que le fil métallique fond. Ce point est nominal, c'est-à-dire qu'il correspond au point où, par conception, fabrication et/ou mise au point, la source d'énergie concentrée, en fonctionnement normal, fait fondre le fil métallique. Ce point est prédéterminé, c'est-à-dire qu'il ne varie pas et reste à la même position en fonctionnement normal. Par exemple, le point nominal de fusion prédéterminé peut être situé à quelques millimètres en aval de la sortie de la buse dans le sens d'avancée du fil depuis la sortie de la buse, par exemple au droit de la buse (i.e. sur une droite perpendiculaire au plan de la sortie de la buse et centrée sur la sortie de la buse). Dans l'exemple d'un laser comme source d'énergie concentrée, le point nominal de fusion prédéterminé ne correspond pas nécessairement au point focal du laser, un tel point focal pouvant conduire à une concentration d'énergie trop importante et indésirable. Dans ce cas, le point focal peut par exemple se situer au-delà du support. Par la suite et sauf indication contraire par « point nominal » on entend « point nominal de fusion prédéterminé ».

Au sens du présent exposé, le terme « support » vise de manière générale la surface où l'on vient déposer le matériau métallique fondu issu de l'extrémité fondue du fil métallique. Ainsi, le support peut être soit le support en tant que tel, sur lequel est formé la pièce en cours de fabrication, ou bien la couche de dépôt de métal précédente sur laquelle une nouvelle couche est en cours de formation/dépôt.

Le point d'impact est un point théorique abstrait représentatif de la zone ou surface de contact entre le support (ou sur la couche précédente) et l'extrémité fondue du fil. Par exemple, le point d'impact peut être le centre géométrique, ou encore le barycentre, de la zone de contact entre la surface et l'extrémité fondue du fil.

La détection du point d'impact peut être effectuée par tout moyen connu par ailleurs par la personne du métier, par exemple par capteur optique et un éventuel post-traitement de l'image capturée, un capteur laser, un palpeur, etc. Par exemple, le capteur laser ou le palpeur peut pointer sur la surface du support à un point immédiatement voisin, par exemple à quelques dixièmes de millimètres ou quelques millimètres de distance, du point d'impact (i.e. à un point immédiatement voisin d'une projection du centre géométrique de la sortie de la buse, au droit de la sortie de la buse i.e. dans un plan perpendiculaire et au voisinage immédiat, par exemple quelques millimètres ou dixièmes de millimètres, d'une droite perpendiculaire au plan de la sortie de la buse et centrée sur la sortie de la buse), un tel point de mesure, formant un point d'impact mesuré, peut être représentatif de la position du point d'impact de manière suffisamment fiable.

La distance D peut être déterminée par tout moyen connu par ailleurs par la personne du métier. Par exemple, la distance D peut être déterminée via un posttraitement et/ou calcul impliquant des données relatives aux positions du point de fusion et du point d'impact, la position du point de fusion étant connue par avance.

Par exemple, par rapport au sens d'avancée/alimentation du fil en sortie de buse, si le point d'impact est en amont du point de fusion, la distance D peut être négative tandis que si le point d'impact est en aval du point de fusion, la distance D peut être positive. Par exemple, lorsque la distance D est négative, on peut ajuster la vitesse d'alimentation Vf de manière à la réduire et, inversement, lorsque la vitesse D est positive, on peut ajuster la vitesse d'alimentation Vf de manière à l'accroitre. La réduction ou l'accroissement de la vitesse d'alimentation Vf peut être proportionnelle au signe de la distance D et/ou à la valeur absolue (ou amplitude) de la distance D. Par exemple, lorsque la distance D est nulle (D=0), la vitesse d'alimentation Vf peut être égale à une vitesse d'alimentation nominale Vf0. Par exemple, lorsque la distance D ne varie pas, la vitesse d'alimentation Vf ne varie pas non plus. Par exemple, la vitesse d'alimentation Vf varie uniquement en fonction de la distance D (i.e. aucun autre paramètre influe la vitesse d'alimentation Vf).

La distance D peut être représentative des irrégularités de surface du support. Ainsi, en ajustant la vitesse d'alimentation de fil métallique en fonction de cette distance D, on peut augmenter le débit de fil et apporter plus de matière là où la distance est grande, i.e. là où il y a des « creux », et réduire le débit de fil et apporter moins de matière là où la distance D est petite, i.e. là où il y a des « bosses ». Ceci peut permettre de former une couche présentant une surface apparente particulièrement régulière, assurant ainsi une grande conformité géométrique à la pièce finale, et ce quel que soit l'état de planéité de la surface du support.

L'ajustement de la vitesse d'alimentation du fil en fonction de la distance D peut permettre de réguler dynamiquement le débit du fil en fonction de l'apport en matière à l'instant présent sur le support. Par exemple, dans l'hypothèse d'un support parfaitement plan, si la vitesse de déplacement relatif entre la buse et le support diminue, voire devient nulle, il peut y avoir un apport de matière trop important si la vitesse d'alimentation Vf en fil reste inchangée. Ceci peut notamment survenir lors des changements de direction de la buse par rapport au support, par exemple pour former un angle, ou pour faire un mouvement d'aller/retour. Inversement, toujours dans l'hypothèse d'un support parfaitement plan, si la vitesse de déplacement relatif entre la buse et le support augmente, il peut y avoir un apport de matière trop faible si la vitesse d'alimentation Vf en fil reste inchangée. Ceci peut notamment survenir après un changement de direction de la buse, lorsque le déplacement de la buse par rapport au support atteint sa vitesse nominale. La régulation de la vitesse d'alimentation Vf du fil en fonction de la distance D peut permettre d'apporter la juste quantité de matière requise pour former la couche en formation, permettant de former une couche présentant une surface apparente particulièrement régulière, assurant ainsi une grande conformité géométrique à la pièce finale, et ce quelle que soit la vitesse de déplacement relative entre la buse et le support.

Une telle régulation est relativement simple à mettre en œuvre, et les paramètres en jeux sont indépendants du contexte de la mise en œuvre (géométrie, matériaux, orientation des mouvements relatifs lors des passes de la buse sur le support, type de machine, expérience de l'opérateur, etc.). Le procédé est donc particulièrement robuste et économe en temps et en argent, et peut permettre de s'affranchir de tout ou partie des opérations de mises au point nécessaires dans les procédés de l'état de la technique, tout en permettant d'obtenir une pièce finale présentant une grande conformité géométrique par rapport à la forme théorique désirée.

Dans certains modes de réalisation, on peut ajuster la vitesse d'alimentation Vf en appliquant une correction Vc dépendante de la distance D selon une fonction Vc = f(D).

Par exemple, la vitesse Vf à un instant t peut être égale à la vitesse Vf à un instant t-1 corrigée par la correction Vc calculée à partir de la distance D déterminée à l'instant t-1. Autrement dit, la vitesse d'alimentation Vf peut être corrigée selon la formule Vf(t)=Vf(t-1)+Vc(t-1) (ou encore Vf(t)=Vf(t-1)+Vc(D(t-1)). Par exemple, lorsque la distance D est nulle, la correction Vc peut être nulle (i.e. la vitesse Vf est inchangée et égale à une vitesse nominale Vf0), lorsque la distance D est positive, la correction Vc peut être positive (i.e. on augmente la vitesse Vf par rapport à la vitesse nominale Vf0) et lorsque la distance D est négative, la correction Vc peut être négative (i.e. on diminue la vitesse Vf par rapport à la vitesse nominale Vf0). La fonction Vc=f(D) ou Vc(t)=f(D(t)), peut être une fonction, ou loi de correction, quelconque.

Une telle correction peut être relativement simple à mettre en œuvre tout en permettant un ajustement satisfaisant de la vitesse d'alimentation Vf. Notamment, les temps de calculs associés à une telle correction peuvent être particulièrement courts, ce qui permet une régulation particulièrement fine et réactive, ce qui peut participer à améliorer la conformité géométrique de la pièce finale obtenue.

Dans certains modes de réalisation, la fonction f(D) peut être bornée.

Pour rappel, une fonction bornée est une fonction dont l'ensemble des valeurs est compris entre une valeur minimale et une valeur maximale. Autrement dit, l'ensemble des valeurs prises par la fonction f(D) est compris entre une valeur minimale Vcmin et une valeur maximale Vcmax, et ce quel que soit D. En valeur absolue Vcmin peut être égal à Vcmax, mais pas nécessairement. Vcmin peut être une valeur négative tandis que Vcmax peut être une valeur positive.

Ainsi, la vitesse Vf peut être au maximum réduite d'une valeur Vcmin et au maximum augmentée d'une valeur Vcmax. Ceci peut permettre d'assurer une certaine régularité dans l'alimentation du fil, grâce à quoi on peut éviter une rupture d'alimentation en fil qui pourrait avoir comme conséquence une discontinuité dans le dépôt de métal fondu ou au contraire un défilement trop rapide du fil qui pourrait avoir comme conséquence une fonte incomplète ou de mauvaise qualité du fil et/ou un amas voire un bourrage de matière (phénomène également connu par la personne du métier sous le terme « surplus de matière »). L'une comme l'autre de ces conséquences peuvent être préjudiciable à l'intégrité géométrique de la pièce finale, voire dans certains cas extrêmes, engendrer des dégâts matériels notamment sur le système d'alimentation (buse et/ou source d'énergie concentrée). Une telle fonction bornée peut donc notamment participer à améliorer la conformité géométrique de la pièce finale obtenue.

Dans certains modes de réalisation, on peut commander la source d'énergie concentrée en fonction de la température de l'extrémité fondue.

Par exemple on commande l'intensité ou la puissance de la source d'énergie concentrée. Par exemple, la température considérée pour réguler la source d'énergie peut être la température de l'extrémité fondue au point d'impact. La température de l'extrémité fondue peut par exemple être déterminée à l'aide d'un capteur de température ou à l'aide d'une caméra thermique. Par exemple, la température de l'extrémité fondue au point d'impact peut évoluer en fonction de la distance D, mais également en fonction d'autres paramètres tels que la température effective du support, qui peut évoluer en fonction du nombre de passes déjà effectuées. Une telle régulation peut permettre d'assurer une meilleure qualité de dépôt, et notamment éviter que le métal fondu déposé ne soit à trop basse température de manière à assurer une bonne qualité de dépôt, ou à trop haute température de manière à ce que le métal déposé conserve une certaine tenue mécanique assurant une certaine stabilité géométrique jusqu'à sa solidification. La combinaison de cette régulation de la source d'énergie avec la régulation de la vitesse d'alimentation peut permettre une synergie conduisant à une grande stabilité du procédé, une grande qualité de dépôt de métal, et au final, une grande conformité géométrique de la pièce finale obtenue.

Un mode de réalisation concerne un programme d'ordinateur comprenant des instructions qui, lorsque le programme est exécuté par un ordinateur, conduisent celui-ci à mettre en œuvre le procédé de fabrication additive par dépôt de fil métallique fondu sous énergie concentrée selon l'un quelconque des modes de réalisation décrits dans le présent exposé.

Ce programme peut utiliser n'importe quel langage de programmation, et être sous la forme de code source, code objet, ou de code intermédiaire entre le code source et le code objet, tel que dans une forme partiellement compilée, ou dans n'importe quelle autre forme souhaitable.

Un mode de réalisation concerne un support de données lisible par ordinateur, sur lequel est enregistré le programme d'ordinateur selon l'un quelconque des modes de réalisation décrits dans le présent exposé.

Le support d'enregistrement peut être n'importe quelle entité ou dispositif capable de stocker un programme. Par exemple, le support peut comporter un moyen de stockage, tel qu'une ROM, par exemple un CD-ROM ou une ROM de circuit microélectronique, ou encore un moyen d'enregistrement magnétique, par exemple une disquette (« floppy disc ») ou un disque dur. Alternativement, le support d'enregistrement peut être un circuit intégré ou une carte électronique dédiée dans lequel le programme est incorporé, le circuit ou la carte étant adapté pour exécuter ou pour être utilisé dans l'exécution du procédé en question.

Un mode de réalisation concerne un dispositif de fabrication additive par dépôt de fil métallique fondu sous énergie concentrée comprenant, un système d'alimentation en fil métallique configuré pour amener le fil métallique à une vitesse d'alimentation Vf, et présentant une buse d'alimentation et une source d'énergie concentrée configurée pour faire fondre une extrémité distale du fil métallique issu de la buse d'alimentation à un point nominal de fusion prédéterminé et créer une extrémité fondue, un système de détection configuré pour détecter la position d'un point d'impact de l'extrémité fondue sur un support, un calculateur configuré pour déterminer la distance D entre la position du point d'impact et la position du point nominal de fusion prédéterminé, et une unité de commande configurée pour ajuster la vitesse d'alimentation Vf en fonction de la distance D.

Le système de détection peut comprendre tout moyen connu par ailleurs par la personne du métier, par exemple un capteur optique avec un éventuel post-traitement de l'image capturée, un capteur laser, un palpeur, etc. Par exemple, le capteur laser ou le palpeur peut pointer sur la surface du support à un point immédiatement voisin, par exemple à quelques dixièmes de millimètres ou quelques millimètres de distance, du point d'impact (i.e. à un point immédiatement voisin d'une projection du centre géométrique de la sortie de la buse, au droit de la sortie de la buse i.e. dans un plan perpendiculaire et au voisinage immédiat, par exemple quelques millimètres ou dixièmes de millimètres, d'une droite perpendiculaire au plan de la sortie de la buse et centrée sur la sortie de la buse), un tel point de mesure, formant un point d'impact mesuré, peut être représentatif de la position du point d'impact de manière suffisamment fiable.

Le calculateur peut comprendre par exemple tout moyen connu par ailleurs par la personne du métier. Par exemple, la distance D peut être déterminée via un posttraitement et/ou calcul impliquant des données relatives aux positions du point de fusion et du point d'impact, la position du point de fusion étant connue par avance

Un tel dispositif peut être relativement simple à réaliser, et les paramètres en jeux sont indépendants du contexte de la mise en œuvre (géométrie, matériaux, orientation des mouvements relatifs lors des passes de la buse sur le support, type de machine, expérience de l'opérateur, etc.). Un tel dispositif est donc particulièrement robuste et économe en temps et en argent, et peut permettre de s'affranchir de tout ou partie des opérations de mises au point nécessaires sur les dispositifs de l'état de la technique, tout en permettant d'obtenir une pièce finale présentant une grande conformité géométrique par rapport à la forme théorique désirée.

Dans certains modes de réalisation, l'unité de commande peut être configurée pour ajuster la vitesse d'alimentation Vf en appliquant une correction Vc dépendante de la distance D selon une fonction Vc =f(D).

Par exemple, la vitesse Vf à un instant t peut être égale à la vitesse Vf à un instant t-1 corrigée par la correction Vc calculée à partir de la distance D déterminée à l'instant t-1. Autrement dit, la vitesse d'alimentation Vf peut être corrigée selon la formule Vf(t)=Vf(t-1)+Vc(t-1) (ou encore Vf(t)=Vf(t-1)+Vc(D(t-1)). Par exemple, lorsque la distance D est nulle, la correction Vc peut être nulle (i.e. la vitesse Vf est inchangée et égale à une vitesse nominale Vf0), lorsque la distance D est positive, la correction Vc peut être positive (i.e. on augmente la vitesse Vf par rapport à la vitesse nominale Vf0) et lorsque la distance D est négative, la correction Vc peut être négative (i.e. on diminue la vitesse Vf par rapport à la vitesse nominale Vf0). La fonction Vc=f(D) ou Vc(t)=f(D(t)), peut être une fonction, ou loi de correction, quelconque. Une telle correction peut être relativement simple à mettre en œuvre tout en permettant un ajustement satisfaisant de la vitesse d'alimentation Vf. Notamment, les temps de calculs associés à une telle correction peuvent être particulièrement courts, ce qui permet une régulation particulièrement fine et réactive, ce qui peut participer à améliorer la conformité géométrique de la pièce finale obtenue.

Dans certains modes de réalisation, la fonction f(D) peut être bornée.

Une telle correction peut être relativement simple à mettre en œuvre tout en permettant un ajustement satisfaisant de la vitesse d'alimentation Vf. Notamment, les temps de calculs associés à une telle correction peuvent être particulièrement courts, ce qui permet une régulation particulièrement fine et réactive, ce qui peut participer à améliorer la conformité géométrique de la pièce finale obtenue.

Dans certains modes de réalisation, l'unité de commande peut être configurée pour commander la source d'énergie concentrée en fonction de la température de l'extrémité fondue.

Par exemple l'unité de commande peut commander l'intensité ou la puissance de la source d'énergie concentrée. Par exemple, la température considérée pour réguler la source d'énergie peut être la température de l'extrémité fondue au point d'impact. La température de l'extrémité fondue peut par exemple être déterminée à l'aide d'un capteur de température ou à l'aide d'une caméra thermique. Par exemple, la température de l'extrémité fondue au point d'impact peut évoluer en fonction de la distance D, mais également en fonction d'autres paramètres tels que la température effective du support, qui peut évoluer en fonction du nombre de passes déjà effectuées. Une telle régulation peut permettre d'assurer une meilleure qualité de dépôt, et notamment éviter que le métal fondu déposé ne soit à trop basse température de manière à assurer une bonne qualité de dépôt, ou à trop haute température de manière à ce que le métal déposé conserve une certaine tenue mécanique assurant une certaine stabilité géométrique jusqu'à sa solidification. La combinaison de cette régulation de la source d'énergie avec la régulation de la vitesse d'alimentation peut permettre une synergie conduisant à une grande stabilité du procédé, une grande qualité de dépôt de métal, et au final, une grande conformité géométrique de la pièce finale obtenue.

### Brève description des dessins

L'objet du présent exposé et ses avantages seront mieux compris à la lecture de la description détaillée faite ci-après de différents modes de réalisation donnés à titre d'exemples non limitatifs. Cette description fait référence aux pages de figures annexées, sur lesquelles :
[Fig. 1] La figure 1 représente schématiquement un dispositif de fabrication additive par dépôt de fil métallique fondu sous énergie concentrée,
[Fig. 2] La figure 2 représente un logigramme d'un procédé de fabrication additive par dépôt de fil métallique fondu sous énergie concentrée,
[Fig. 3] La figure 3 représente schématiquement la tête de dispositif de fabrication additive de la figure 1, en fonctionnement, et
[Fig. 4] La figure 4 représente une coupe tomographique comparative entre une pièce fabriquée selon un procédé et à l'aide d'un dispositif de l'état de la technique et une pièce fabriquée selon un procédé et à l'aide d'un dispositif selon le présent exposé.

### Description des modes de réalisation

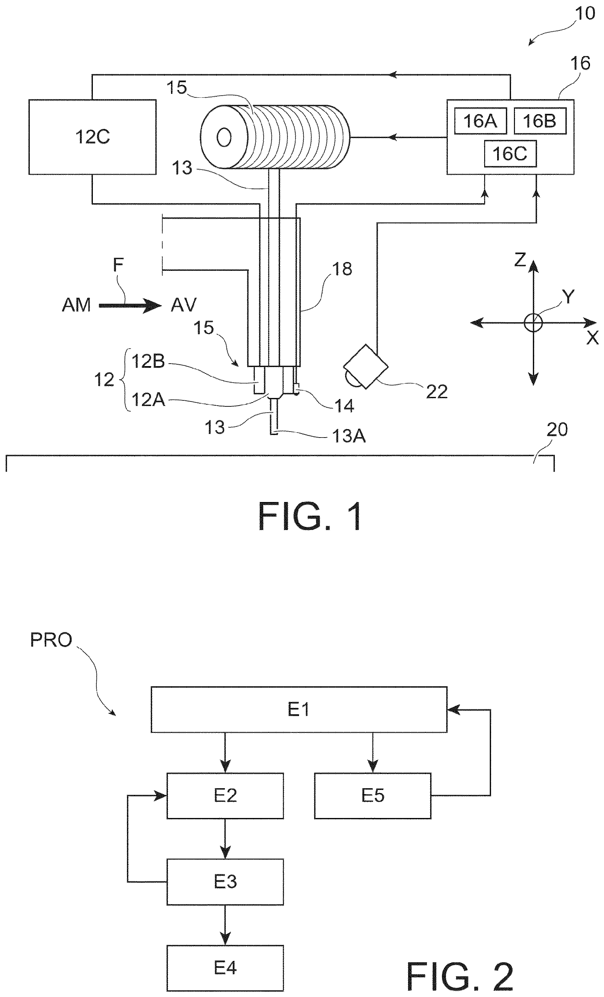

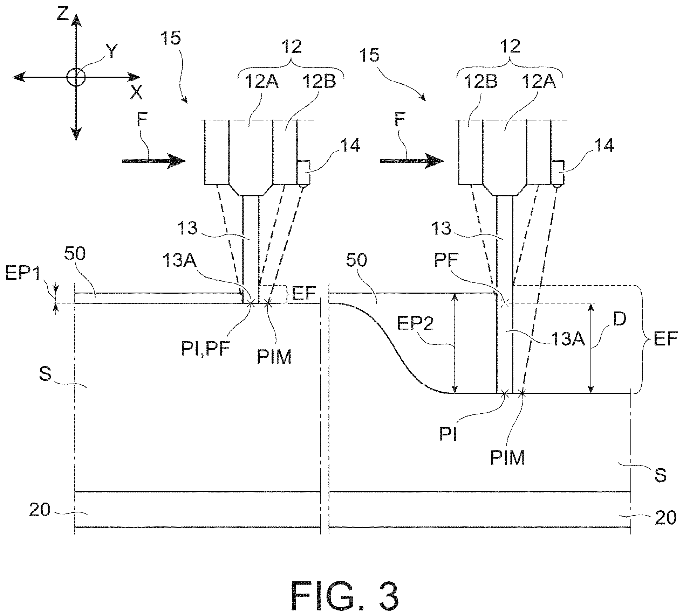

La figure 1 représente schématiquement un dispositif de fabrication additive par dépôt de fil métallique fondu sous énergie concentrée 10 comprenant un système d'alimentation en fil métallique 12 configuré pour amener le fil métallique 13 à une vitesse d'alimentation Vf et présentant une buse d'alimentation 12A et une source d'énergie concentrée 12B configurée pour faire fondre une extrémité distale 13A du fil métallique 13 issu de la buse d'alimentation 12A à un point nominal de fusion prédéterminé PF et créer une extrémité fondue EF (voir figure 3), un système de détection 14 configuré pour détecter la position d'un point d'impact PI (voir figure 3) de l'extrémité fondue EF sur un support S, un calculateur 16A configuré pour déterminer la distance D (voir figure 3) entre la position du point d'impact PI et la position du point nominal de fusion prédéterminé PF, et une unité de commande 16B configurée pour ajuster la vitesse d'alimentation Vf en fonction de la distance D. Dans cet exemple, l'unité de commande 16B est configurée pour ajuster la vitesse d'alimentation Vf en appliquant une correction Vc dépendante de la distance D selon une fonction Vc =f(D). Dans cet exemple, la fonction f(D) est bornée.

Le système d'alimentation 12 en fil 13 peut comprendre une bobine de fil 15 entrainée en rotation par un moteur asservi non représentée, grâce à quoi la vitesse Vf peut être ajustée. Dans cet exemple, la source d'énergie concentrée 12B est un laser, mais toute autre source d'énergie concentrée est envisageable. Le laser 12B peut être alimenté par un générateur laser 12C, qui peut être asservi. Dans cet exemple, le laser 12B est un laser coaxial avec la buse 12A et l'amenée de fil 13, mais tout autre configuration est envisageable, par exemple un laser avec apport de fil latéral.

Dans cet exemple, le système de détection 14 peut comprendre un capteur laser configuré pour pointer sur la surface du support S à un point immédiatement voisin, par exemple à quelques dixièmes de millimètres ou quelques millimètres de distance du point d'impact PI (i.e. à un point immédiatement voisin du centre géométrique de la sortie de la buse d'alimentation, au droit de la sortie de la buse d'alimentation). Dans cet exemple, le capteur laser 14 peut être configuré pour pointer en amont du point d'impact PI dans le sens de déplacement F de la buse 12A, la buse 12A se déplaçant de l'amont AM vers l'aval AV. Le système de détection 14 peut comprendre plusieurs capteurs lasers, un seul capteur étant représenté sur les figures pour la clarté de l'exposé, ces capteurs pouvant être régulièrement répartis autour de la buse 12A pour s'assurer d'avoir toujours un capteur laser pointant à l'aval du point d'impact PI, notamment en cas de changement de direction F d'avancement de la buse 12A par le bras 18.

Le système d'alimentation 12 et le système de détection 14 peuvent être montés sur un bras 18 configuré pour déplacer le système d'alimentation 12 et le système de détection 14 par rapport à un plateau 20, par exemple dans une direction de longueur X, une direction de largeur Y et une direction de hauteur Z. Le bras 18 peut être de tout type, par exemple un bras robot cartésien ou un bras robot polaire. Le plateau 20 est configuré pour recevoir et maintenir un support S. Le système d'alimentation 12 et le système de détection 14 peuvent former ensemble une tête 15 du dispositif de fabrication additive 10, cette tête 15 pouvant être montée sur une extrémité du bras 18 et déplacée par le bras 18. Pour faire une couche, le bras 18 déplace la tête 15 selon la direction X et/ou Y, et pour réaliser une couche suivante, le brase déplace la tête selon la direction Z, vers le haut sur la figure 1, puis de nouveau selon la direction X et/ou Y.

Le calculateur 16A et l'unité de commande 16B peuvent être regroupés au sein d'une unité de commande électronique 16 (ou ECU pour Electric Control Unit » en anglais). Le calculateur 16A et l'unité de commande 16B peuvent par exemple être formés par un seul et même microprocesseur. L'unité de commande électronique 16 peut comprendre une ROM 16C formant un exemple de support de données lisible par ordinateur, sur lequel est enregistré le programme d'ordinateur comprenant des instructions qui, lorsque le programme est exécuté par un ordinateur, conduisent celui-ci à mettre en œuvre le procédé de fabrication additive par dépôt de fil métallique fondu sous énergie concentrée décrit ci-après. Sur la figure 1, les flèches sur les connexions (filaires ou non) entre l'unité de commande électronique 16 et les différents éléments du dispositif 10 symbolisent l'orientation du flux d'informations. Notamment, le calculateur 16A reçoit des informations du système de détection 14 tandis que l'unité de commande 16B envoie des informations vers le système d'alimentation 12, dans cet exemple vers le moteur asservi non représenté configuré pour dérouler la bobine 15 de fil 13.

Dans cet exemple, l'unité de commande 16B est configurée pour commander la source d'énergie concentrée 12B en fonction de la température de l'extrémité fondue EF. Dans cet exemple, le dispositif de fabrication additive 10 peut comprendre une caméra thermique 22 configurée pour mesurer la température de l'extrémité fondue EF. Les données recueillies par la caméra thermique 22 peuvent être transmises au calculateur 16A pour posttraitement. L'unité de commande 16B, en fonction du traitement des données par le calculateur 16A, peut commander et transmettre des informations au générateur laser 12C de manière à ajuster l'intensité ou la puissance de la source d'énergie concentrée 12A.

Un exemple de mise en œuvre du dispositif de fabrication 10 va être maintenant décrit en référence aux figures 2 et 3. La figure 2 est un logigramme représentant différentes étapes d'un procédé de fabrication additive par dépôt de fil métallique fondu sous énergie concentrée PRO tandis que la figure 3 représente la progression du dépôt d'une couche métallique à des endroits différents d'un support S. La partie gauche de la figure 3 représente une première configuration du support S et une phase de dépôt associée tandis que la partie droite de la figure 3 représente une deuxième configuration du support S, dans cet exemple en aval de la première configuration du support S de la partie gauche de la figure 3, selon le sens de déplacement F de la tête 15 (de gauche à droite sur la figure 3), et une phase de dépôt associée suivant la phase de dépôt de la partie gauche de la figure 3.

Dans le cadre du procédé de fabrication additive par dépôt de fil métallique fondu sous énergie concentrée PRO, on fournit d'abord un dispositif de fabrication additive par dépôt de fil métallique fondu sous énergie concentrée comprenant un système d'alimentation en fil métallique 12 configuré pour amener le fil métallique 13 à une vitesse d'alimentation Vf, et présentant une buse d'alimentation 12A et une source d'énergie concentrée 12B configurée pour faire fondre une extrémité distale 13A du fil métallique 13 issu de la buse d'alimentation 12A à un point nominal de fusion prédéterminé PF et créer une extrémité fondue EF, tel que le dispositif 10 décrit ci-avant en référence à la figure 1.

Au cours d'une étape E1, on fait fondre une extrémité distale 13A du fil métallique 13 avec la source d'énergie concentrée 12 afin de créer une extrémité fondue EF pour déposer le matériau métallique fondu issu de l'extrémité fondue EF sur le support S. Sur la figure 3, le support S est disposé sur le plateau 20. La tête 15 du dispositif 10 se déplace selon la flèche F vis-à-vis du support S, et forme un cordon 50 de dépôt métallique. Les traits discontinus issus de la source d'énergie concentrée 12B symbolisent la concentration du faisceau laser vers le point de fusion PF.

Au cours d'une étape E2, on détecte la position d'un point d'impact PI de l'extrémité fondue EF sur le support S. Dans cet exemple, pour détecter la position du point d'impact PI, le système de détection 14 détecte la position d'un point d'impact mesuré PIM, qui est représentative de la position du point d'impact PI. Le trait discontinu issu du dispositif de détection 14 symbolise le rayon laser pour la mesure de la position du point PIM.

Ensuite, au cours d'une étape E3, on détermine la distance D entre la position du point d'impact PI et la position du point nominal de fusion prédéterminé PF. Dans cet exemple, le système de détection 14 mesure une distance relative selon la direction Z entre lui-même et le point d'impact mesuré PIM. La position du point de fusion PF étant connue par ailleurs, un posttraitement des données issues du système de détection 14 par le calculateur 16A permet de calculer la distance D. Sur la partie gauche de la figure 3, le point d'impact PI est confondu avec le point de fusion PF, de sorte que la distance D est nulle (D=0). Sur la partie droite de la figure 3, le point d'impact PI est « en-dessous » du point de fusion PF selon la direction de hauteur Z, de sorte que la distance D est non nulle et positive.

Ensuite, au cours d'une étape E4, on ajuste la vitesse d'alimentation Vf en fonction de la distance D. Par exemple, sur la partie gauche de la figure 3, la distance D est nulle et l'ajustement ou correction de la vitesse d'alimentation Vf est nul, de sorte que la vitesse Vf peut être égale à une vitesse nominale d'alimentation Vf0. Cette vitesse Vf0 correspond par exemple à une configuration nominale où le point d'impact PI et le point de fusion PF coïncident. Sur l'exemple de la partie droite de la figure 3, la distance D est non nulle et positive, et l'ajustement ou correction de la vitesse d'alimentation Vf est positif, de sorte que la vitesse Vf est augmentée par rapport à la configuration de la partie de gauche de la figure 3.

On note qu'un tel ajustement permet notamment de compenser les irrégularités de surface sur support S. Sur la partie gauche de la figure 3, le point d'impact PI est situé à une position nominale, de sorte que la vitesse d'alimentation du fil 13 est également à une vitesse nominale Vf0, et les cordon métallique 50 déposée présente une épaisseur EP1 selon la direction de hauteur Z correspondant à une hauteur nominale. Sur la partie droite de la figure 3, le support S présente une dépression ou creux, par rapport à la partie droite, de sorte que la vitesse Vf sur cette partie est plus grande que la vitesse Vf0. Ceci permet d'obtenir un plus grand apport de matière permettant de combler cette dépression, le cordon métallique 50 déposée présentant une épaisseur EP2 plus importante que l'épaisseur EP1, mais permettant d'obtenir au final une surface de couche 50 globalement plane. Inversement, si le support S présentait un relief en saillie, la vitesse Vf serait diminuée par rapport à la vitesse Vf0, permettant de déposer moins de matière pour compenser cette saillie et obtenir au final une surface de couche globalement plane. Un tel ajustement dynamique de la vitesse d'alimentation Vf permet aussi de compenser une éventuelle irrégularité de dépôt résultant des ralentissements/accélérations du bras 18 lors des changements de directions, le point PI ayant tendance à « monter » selon la direction de hauteur Z lorsque le bras 18 ralenti et à « descendre » selon la direction de hauteur Z lorsque le bras 18 accélère. Dans cet exemple, si la distance D ne varie pas la vitesse Vf ne varie pas.

Dans cet exemple, on ajuste la vitesse d'alimentation Vf en appliquant une correction Vc dépendante de la distance D selon une fonction Vc = f(D). Dans cet exemple, la fonction f(D) est bornée. Dans cet exemple, la vitesse Vf à un instant t est égale à la vitesse Vf à un instant t-1 corrigée par la correction Vc calculée à partir de la distance D déterminée à l'instant t-1. Autrement dit, la vitesse d'alimentation Vf est corrigée selon la formule Vf(t)=Vf(t-1)+Vc(D(t-1)). Dans cet exemple, les étapes E2 et E3 peuvent être mises en œuvre en boucle pour déterminer la distance D à chaque instant t, de manière à pouvoir actualiser au temps machine suivant t+1 l'ajustement de la vitesse Vf. Dans cet exemple, si la distance D ne varie pas, la correction Vc ne varie pas.

Dans cet exemple, le procédé PRO comprend un étape optionnelle E5 au cours de laquelle on commande la source d'énergie concentrée 12B en fonction de la température de l'extrémité fondue EF. Par exemple, la caméra thermique 22, non représentée sur la figure 3, film l'extrémité fondue EF en permanence, et envoie les données captées au calculateur 16A pour posttraitement tandis que l'unité de commande 16B, en fonction du résultat du traitement réalisé par le calculateur 16A, commande le générateur laser 12C de manière à ajuster l'intensité ou la puissance de la source d'énergie concentrée 12A. Dans cet exemple, les étapes E1 et E5 peuvent être mises en œuvre en boucle pour déterminer la température de l'extrémité fondue EF à un instant t et commander la source d'énergie concentrée 12B à l'instant machine suivant t+1.

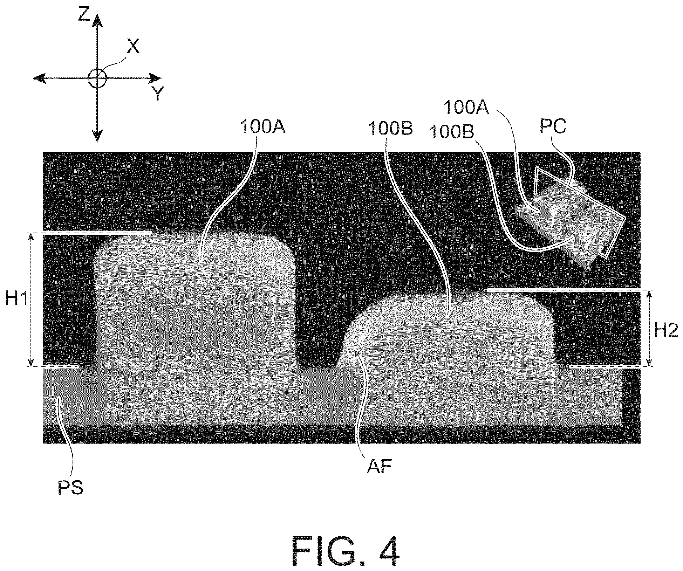

Le procédé PRO et le dispositif 10 de fabrication additive selon le présent exposé permettent d'obtenir des pièces, notamment des pièces de grande hauteur selon la direction de hauteur Z, présentant une grande conformité géométrique par rapport à la forme théorique désirée. La figure 4 représente une coupe tomographique comparative sur une forme parallélépipédique théorique de référence.

Plus précisément, la figure 4 est une photo d'une coupe tomographique comparative de deux pièces de forme parallélépipédique 100A et 100B, issues d'une même pièce théorique de référence (ou même modèle numérique 3D). La pièce test 100A est a été fabriquée selon le procédé PRO dans lequel on ajuste la vitesse Vf en fonction de la distance D tandis que la pièce témoin 100B a été fabriquée selon un procédé de l'état de la technique dans lequel on ne contrôle pas la vitesse Vf en fonction de la distance D. L'encart en haut à droite de la figure 4 représente les pièces 100A et 100B vues en perspective sur une même plaque support PS tandis que la vue principale de la figure 4 représente une vue en coupe selon le plan de coupe PC de l'encart, des pièces 100A et 100B ainsi que du support S.

On constate que la pièce test 100A obtenue selon le procédé PRO et avec le dispositif 10 selon le présent exposé, présente une très grande conformité géométrique, les parois verticales de la coupe étant très régulières et les angles entre les différentes faces de la forme parallélépipédique tout à fait satisfaisants et présentant de faibles arrondis très localisés. La pièce test 100A présente, relativement à la pièce témoins 100B une très grande hauteur H1, dans cet exemple résultant de 20 passes (i.e. 20 couches).

La pièce témoin 100B obtenue selon un procédé et un dispositif selon l'état de la technique, présente des parois verticales relativement déformées. On constate notamment que les dernières passes ont conduit à des défauts notables et notamment un affaissement de matière AF, le métal ayant fondu et ayant coulé depuis les dernières couches sur le support S, sur les côtés. Ces défauts n'ont pas permis de procéder à plus de 10 passes (i.e. 10 couches), l'état de surface et de la dernière couche n'autorisant plus aucune passe supplémentaire. La pièce témoin 100B présente donc au final une hauteur H2 moindre que la hauteur H1 de la pièce test 100A, la pièce test 100A présentent une hauteur H1 étant égale au double de la hauteur H2.

Cette coupe tomographique permet aussi de constater que le procédé PRO et le dispositif 10 selon le présent exposé préservent les qualités de dépôt obtenues par ailleurs, et permettent notamment d'obtenir une pièce 100A présentant une densité homogène et satisfaisante.

Bien que la présente invention ait été décrite en se référant à des modes de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Procédé de fabrication additive par dépôt de fil métallique fondu sous énergie concentrée (PRO) dans lequel :
- on fournit un dispositif de fabrication additive par dépôt de fil métallique fondu sous énergie concentrée (10) comprenant un système d'alimentation en fil métallique (12) configuré pour amener le fil métallique (13) à une vitesse d'alimentation Vf, et présentant une buse d'alimentation (12A) et une source d'énergie concentrée (12B) configurée pour faire fondre une extrémité distale (13A) du fil métallique (13) issu de la buse d'alimentation (12A) à un point nominal de fusion prédéterminé (PF) et créer une extrémité fondue (EF) ;
- on fait fondre (E1) une extrémité distale (13A) du fil métallique (13) avec la source d'énergie concentrée (12B) afin de créer une extrémité fondue (EF) pour déposer le matériau métallique fondu issu de l'extrémité fondue (EF) sur un support (S) ;
- on détecte (E2) la position d'un point d'impact (PI) de l'extrémité fondue (EF) sur le support (S) ;
- on détermine (E3) la distance D entre la position du point d'impact (PI) et la position du point nominal de fusion prédéterminé (PF) ; et
- on ajuste (E4) la vitesse d'alimentation Vf en fonction de la distance D.

2. Procédé de fabrication additive par dépôt de fil métallique fondu sous énergie concentrée (PRO) selon la revendication 1, dans lequel on ajuste la vitesse d'alimentation Vf en appliquant une correction Vc dépendante de la distance D selon une fonction Vc = f(D).

3. Procédé de fabrication additive par dépôt de fil métallique fondu sous énergie concentrée (PRO) selon la revendication 2, dans lequel la fonction f(D) est bornée.

4. Procédé de fabrication additive par dépôt de fil métallique fondu sous énergie concentrée (PRO) selon l'une quelconque des revendications 1 à 3, dans lequel on commande (E5) la source d'énergie concentrée (12B) en fonction de la température de l'extrémité fondue (EF).

5. Programme d'ordinateur comprenant des instructions qui, lorsque le programme est exécuté par un ordinateur, conduisent celui-ci à mettre en œuvre le procédé de fabrication additive par dépôt de fil métallique fondu sous énergie concentrée (PRO) selon l'une quelconque des revendications 1 à 4.

6. Support de données (16C) lisible par ordinateur, sur lequel est enregistré le programme d'ordinateur selon la revendication 5.

7. Dispositif de fabrication additive par dépôt de fil métallique fondu sous énergie concentrée (10) comprenant, un système d'alimentation en fil métallique (12) configuré pour amener le fil métallique (13) à une vitesse d'alimentation Vf et présentant une buse d'alimentation (12A) et une source d'énergie concentrée (12B) configurée pour faire fondre une extrémité distale (13A) du fil métallique (13) issu de la buse d'alimentation (12A) à un point nominal de fusion prédéterminé (PF) et créer une extrémité fondue (EF), un système de détection (14) configuré pour détecter la position d'un point d'impact (PI) de l'extrémité fondue (EF) sur un support (S), un calculateur (16A) configuré pour déterminer la distance D entre la position du point d'impact (PI) et la position du point nominal de fusion prédéterminé (PF), et une unité de commande (16B) configurée pour ajuster la vitesse d'alimentation Vf en fonction de la distance D.

8. Dispositif de fabrication additive par dépôt de fil métallique fondu sous énergie concentrée (10) selon la revendication 7, dans lequel l'unité de commande (16B) est configurée pour ajuster la vitesse d'alimentation Vf en appliquant une correction Vc dépendante de la distance D selon une fonction Vc =f(D).

9. Dispositif de fabrication additive par dépôt de fil métallique fondu sous énergie concentrée (10) selon la revendication 8, dans lequel la fonction f(D) est bornée.

10. Dispositif de fabrication additive par dépôt de fil métallique fondu sous énergie concentrée (10) selon l'une quelconque des revendications 7 à 9, dans lequel l'unité de commande (16B) est configurée pour commander la source d'énergie concentrée (12B) en fonction de la température de l'extrémité fondue (EF).
